# EUROPEAN PATENT APPLICATION

(11) **EP 3 392 661 A1**
(43) Date of publication of application: **24.10.2018**
(21) Application number: 16875504.9
(22) Date of filing: 08.12.2016
(51) Int. Cl.: G01N 35/04

(54) **CONTAINER SUPPLY UNIT AND AUTOMATIC ANALYZER**

(30) Priority: 15.12.2015 JP 2015243982
(71) Applicant: Jeol Ltd., Akishima-shi, Tokyo 196-8558 (JP)
(72) Inventor: NAKAMURA Mizuki, Akishima-shi Tokyo 196-8558 (JP)
(74) Representative: Boult Wade Tennant LLP
(86) International application number: PCT/JP2016/086496
(87) International publication number: WO 2017/104524

(57) **Abstract**

A container supply unit is provided with a container retaining unit, a container discharge unit, and a container alignment unit. The container alignment unit is provided with an alignment rail. The alignment rail includes a conveying speed ensuring area and an orientation stabilizing area. The conveying speed ensuring area is inclined with respect to a horizontal direction. The orientation stabilizing area is provided continuously on a downstream side in a conveying direction of the conveying speed ensuring area in which an inclination angle with respect to the horizontal direction is set to be smaller than that in the conveying speed ensuring area. Then, the transfer position is provided on a downstream side in the conveying direction of the orientation stabilizing area, and is arranged so as to be parallel to the horizontal direction.

## Description

### Technical Field

The present invention relates to a container supply unit which supplies a container used for analyzing a specimen and an automatic analyzer provided with the container supply unit.

### Background Art

An automatic analyzer which quantitatively measures a specific substance in a specimen which is a biological specimen such as blood or urine is conventionally known. Then, in the automatic analyzer, a disposable cuvette (disposable reaction container) which accommodates the specimen and a reagent is used. Such automatic analyzer is provided with, for example, a reaction unit in which cuvettes are arranged, a dispensing unit which dispenses the specimen and reagent into the cuvettes arranged in the reaction unit, and a container supply unit which supplies an empty cuvette to the reaction unit.

Patent Literature 1 discloses a technology in which an inclined table inclined downward from a reservoir in which cuvettes (containers) are retained and a separator toward a transfer position is provided. In the technology disclosed in Patent Literature 1, the container slides on an inclined table rail of the inclined table by its own weight, and the container is conveyed to the transfer position.

Also, in recent years, a technology is also proposed in which a vibration generator which vibrates an alignment rail is provided in order to increase a conveying speed of the container.

### Citation List

### Patent Literature

Patent Literature 1: JP 2015-78069 A

### Summary of Invention

### Technical Problem

However, in the technology disclosed in Patent Literature 1, an inclination angle of the inclined table for conveying containers is uniformly formed from a conveyance start position of the container to the transfer position being a conveyance end position. Therefore, in a case where the inclination angle of a conveying rail which is the inclined table rail is increased in order to increase the conveying speed, an orientation of the container might become unstable in the vicinity of the transfer position on the alignment rail and poor transfer might occur. Also, in a case where the inclination angle of the conveying rail is reduced, the conveying speed might be decreased and the containers might be clogged on the alignment rail.

Furthermore, when the vibration by the vibration generator is increased in order to increase the conveying speed, there is a problem that not only the vibration generator increases in size but also the poor transfer occurs because the orientation of the container is lost.

In consideration of the above-described problems, an object of the present invention is to provide a container supply unit capable of stabilizing an orientation of a container at a transfer position without lowering a conveying speed of the container and an automatic analyzer provided with this container supply unit.

### Solution to Problem

In order to solve the above-described problems and achieve the object of the present invention, a container supply unit of the present invention is provided with a container retaining unit, a container discharge unit, and a container alignment unit. The container retaining unit retains a plurality of containers. The container discharge unit discharges a plurality of containers retained in the container retaining unit. The container alignment unit aligns the containers discharged from the container discharge unit.

The container alignment unit is provided with an alignment rail. The alignment rail movably supports the container discharged from the container discharging unit to a transfer position where the container is delivered to another device. The alignment rail includes a conveying speed ensuring area and an orientation stabilizing area. The conveying speed ensuring area conveys the container arranged from the container discharge unit and is inclined with respect to the horizontal direction. The orientation stabilizing area is provided continuously on a downstream side in a conveying direction of the conveying speed ensuring area and conveys the container in which an inclination angle with respect to the horizontal direction is set to be smaller than that in the conveying speed ensuring area. Then, the transfer position is provided on a downstream side in the conveying direction of the orientation stabilizing area, and is arranged so as to be parallel to the horizontal direction.

Also, the automatic analyzer of the present invention includes a reaction unit which holds a container in which a specimen and a reagent are dispensed into the held container, and the container supply unit described above which supplies the container to the reaction unit. Advantageous Effects of Invention

According to the container supply unit and the automatic analyzer of the present invention, it is possible to stabilize the orientation of the container at the transfer position without lowering the conveying speed of the container.

### Brief Description of Drawings

Fig. 1 is a schematic configuration diagram illustrating an automatic analyzer according to an embodiment of the present invention.
Fig. 2 is a perspective view illustrating a container used in the automatic analyzer according to the embodiment of the present invention.
Fig. 3 is a perspective view (part 1) illustrating a container supply unit according to the embodiment of the present invention.
Fig. 4 is a perspective view (part 2) illustrating the container supply unit according to the embodiment of the present invention.
Fig. 5 is a side view illustrating the container supply unit according to the embodiment of the present invention.
Fig. 6 is a perspective view illustrating the vicinity of a transfer position of an alignment rail in the container supply unit according to the embodiment of the present invention.
Fig. 7 is a perspective view illustrating the alignment rail in the container supply unit according to the embodiment of the present invention.
Fig. 8 is a side view illustrating the alignment rail in the container supply unit according to the embodiment of the present invention.
Fig. 9 is a side view illustrating the alignment rail in the container supply unit according to the embodiment of the present invention.
Fig. 10 is an illustrative view illustrating the transfer position of the alignment rail in the container supply unit according to the embodiment of the present invention.
Fig. 11 is a plan view illustrating the transfer position of the alignment rail in the container supply unit according to a first embodiment of the present invention.

### Description of Embodiments

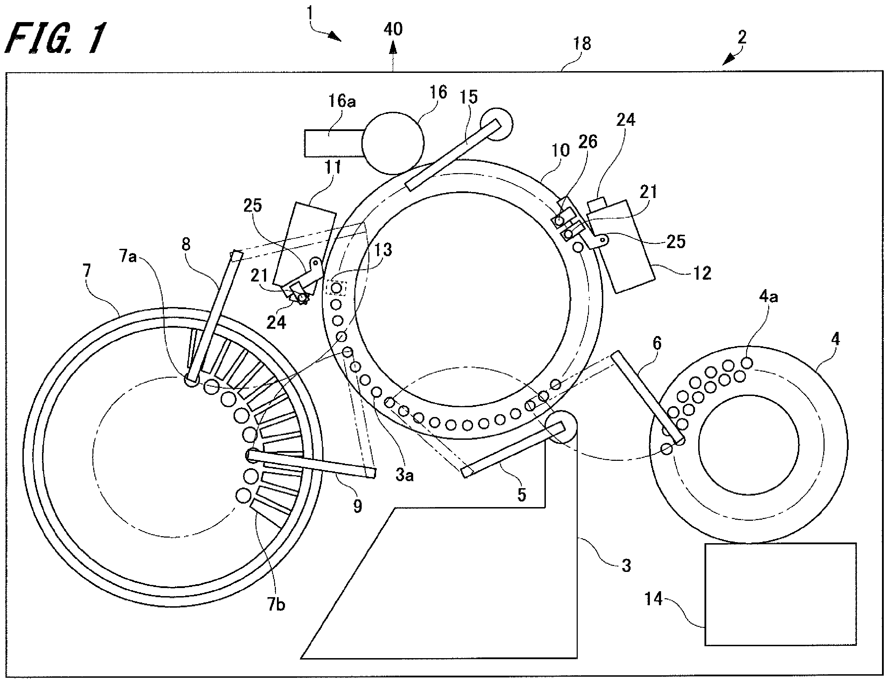

An embodiment of a container supply unit and an automatic analyzer of the present invention are hereinafter described with reference to Figs. 1 to 11. Meanwhile, in the drawings, common members are assigned with the same reference numeral.

### 1. Configuration of Automatic Analyzer

First, an automatic analyzer according to the embodiment of the present invention is described with reference to Fig. 1.

Fig. 1 is a schematic configuration diagram illustrating the automatic analyzer according to the embodiment of the present invention.

### [Overview of Automatic Analyzer]

An immune analyzer which performs immune analysis such as antigen antibody reaction of a subject is applied to an automatic analyzer 1 illustrated in Fig. 1. The automatic analyzer 1 is provided with a measurement device 2 and a control device 40 which controls an entire automatic analyzer 1 including the measurement device 2 and analyzes measurement data output from the measurement device 2.

The automatic analyzer 1 to which the immune analyzer is applied conducts highly sensitive measurement using, for example, a chemiluminescent enzyme immunoassay (CLEIA). As a main step, CLEIA includes a reaction step of reacting a specimen (antigen or antibody) with a reagent in a reaction container, a separation step of separating a reaction product (bound) and an unreacted substance (free) in the reaction container (BF separation), and a photometry step of measuring an amount of luminescence generated from an immune complex generated by reaction of each reagent and the specimen.

### [Measuring System of Automatic Analyzer]

The measurement device 2 is roughly provided with a container supply unit 3, a specimen installation unit 4, a container conveyance unit 5, a specimen dispensing unit 6, a reagent cooling unit 7, a first reagent dispensing unit 8, a second reagent dispensing unit 9, an immune enzyme reaction unit 10, a first BF separation unit 11, a second BF separation unit 12, a substrate solution cooler 14, a container transfer unit 15, and a luminescence measurement unit 16. The units such as the container supply unit 3 and the specimen installation unit 4, the substrate solution cooler 14, the container transfer unit 15, and the luminescence measurement unit 16 are accommodated in a device exterior body 18.

The container supply unit 3 accommodates a plurality of containers (cuvettes) 100 and arranges the plurality of containers 100 one by one in a transfer position (transfer position). The container 100 arranged in the transfer position is conveyed to the immune enzyme reaction unit 10 by the container conveyance unit 5. The specimen and a predetermined reagent are injected into the container 100 conveyed to the immune enzyme reaction unit 10.

The container conveyance unit 5 is provided with an arm which freely moves up and down in a vertical direction and rotates about a vertical line passing through a base end thereof as a central axis, and a holding unit provided at a distal end of the arm. The container conveyance unit 5 holds the container 100 arranged in the transfer position of the container supply unit 3 by the holding unit, turns the arm, and conveys the same to a predetermined position of the immune enzyme reaction unit 10 at a predetermined timing.

The specimen installation unit 4 is provided with a turn table formed into a container shape having a substantially cylindrical shape with one end in an axial direction opened. In this specimen installation unit 4, a plurality of specimen containers 4a is accommodated. In the specimen container 4a, a specimen (sample) being blood, urine or the like collected from a subject is accommodated. A plurality of specimen containers 4a is arranged side by side at a predetermined interval in a circumferential direction of the specimen installation unit 4. The specimen installation unit 4 is supported so as to be rotatable in the circumferential direction by a driving mechanism not illustrated. Then, the specimen installation unit 4 rotates at a predetermined speed by a predetermined angular range in the circumferential direction by a driving mechanism not illustrated. In the example of Fig. 1, two lines of the specimen containers 4a arranged in the circumferential direction of the specimen installation unit 4 are provided at a predetermined interval in a radial direction of the specimen installation unit 4. Meanwhile, as the specimen, a specimen diluted with a predetermined dilute solution may also be used.

The specimen dispensing unit 6 is provided with a probe attached to a distal end which sucks and discharges the specimen and an arm which freely moves up and down in the vertical direction and rotates about a vertical line passing through a base end thereof as a central axis. The specimen dispensing unit 6 sucks the specimen in the specimen container 4a moved to a predetermined position of the specimen installation unit 4 with the probe, turns the arm, and dispenses the same into the container 100 in a predetermined position of the immune enzyme reaction unit 10 at a predetermined timing.

The reagent cooling unit 7 is provided with a turn table formed into a container shape having a substantially cylindrical shape with one end in an axial direction opened as is the case with the specimen installation unit 4. The reagent cooling unit 7 is rotatably supported in a circumferential direction by a driving mechanism not illustrated and rotates in a normal direction or an opposite direction at a predetermined speed by a predetermined angular range in the circumferential direction by the driving mechanism not illustrated.

In the reagent cooling unit 7, a first reagent container 7a and a second reagent container 7b are accommodated. The first reagent container 7a and the second reagent container 7b are arranged side by side at a predetermined interval in the circumferential direction of the reagent cooling unit 7. In the first reagent container 7a, as a first reagent, a magnetic reagent formed of magnetic particles which react with a target antigen in the specimen is accommodated. Also, in the second reagent container 7b, as a second reagent, a labeling reagent (enzyme antibody) which reacts with a reaction product obtained by binding the antigen in the specimen and the magnetic reagent is accommodated. The interior of the reagent cooling unit 7 is kept at predetermined temperature by a cooling mechanism not illustrated. Therefore, the first reagent (magnetic reagent) accommodated in the first reagent container 7a and the second reagent (labeling reagent) accommodated in the second reagent container 7b are cooled at predetermined temperature.

The first reagent dispensing unit 8 is provided with a probe attached to a distal end which sucks and discharges the specimen and an arm which freely moves up and down in the vertical direction and rotates about a vertical line passing through a base end thereof as a central axis. The first reagent dispensing unit 8 sucks the first reagent (magnetic reagent) in the first reagent container 7a moved to a predetermined position of the reagent cooling unit 7 with the probe, turns the arm, and dispenses the same into the container 100 in a predetermined position of the immune enzyme reaction unit 10 at a predetermined timing.

The second reagent dispensing unit 9 has the configuration similar to that of the first reagent dispensing unit 8. The second reagent dispensing unit 9 sucks the second reagent (labelling reagent) in the second reagent container 7b moved to a predetermined position of the reagent cooling unit 7 with the probe, turns the arm, and dispenses the same into the container 100 in a predetermined position of the immune enzyme reaction unit 10 at a predetermined timing.

In the immune enzyme reaction unit 10, an immune reaction between a specimen and a predetermined reagent corresponding to an analytical item and an enzyme reaction caused by the immune complex generated by this immune reaction and a chemiluminescent substrate are performed in the container 100 arranged in a circumferential direction. The immune enzyme reaction unit 10 is provided with a turn table formed into a container shape having a substantially cylindrical shape with one end in an axial direction opened as is the case with the specimen installation unit 4. The immune enzyme reaction unit 10 is rotatably supported in the circumferential direction by a driving mechanism not illustrated and rotates at a predetermined speed by a predetermined angular range in the circumferential direction by the driving mechanism not illustrated. Herein, the immune enzyme reaction unit 10 rotates counterclockwise. In the example of Fig. 1, one line of the containers 100 arranged in the circumferential direction of the immune enzyme reaction unit 10 is set at a predetermined interval in a radial direction of the immune enzyme reaction unit 10; however, a line of the containers 100 for the first reagent and a line of the containers 100 for the second reagent to be described later may be provided at a predetermined interval in the radial direction.

When the magnetic reagent is dispensed by the first reagent dispensing unit 8 into the container 100 into which the specimen is injected, the immune enzyme reaction unit 10 stirs a mixed solution of the magnetic reagent and the specimen by a stirring mechanism not illustrated and allows immune reaction of the antigen in the specimen and the magnetic reagent for a certain period of time (primary immune reaction). Next, the immune enzyme reaction unit 10 moves the container 100 to a first magnetism collecting mechanism (magnet 13), and magnetically collects the reaction product obtained by binding the antigen and the magnetic reagent by magnetic force. Then, in this state, the interior of the container 100 is cleaned, and an unreacted substance which does not react with the magnetic reagent is removed (primary BF separation).

The first magnetism collecting mechanism is fixed at a position corresponding to the first BF separation unit 11 arranged in the vicinity of an outer periphery of the immune enzyme reaction unit 10. The turn table of the immune enzyme reaction unit 10 is formed of two layers: a fixed lower layer and a rotatable upper layer. The magnet 13 is arranged on the lower turn table as the first magnetism collecting mechanism, and the container 100 is arranged on the upper turn table. The magnet 13 magnetically collects the reaction products in the container 100.

The first BF separation unit 11 is provided with an arm 25, a nozzle 21 attached to the arm 25, and a cleaning tank 24. The arm 25 freely moves up and down in the vertical direction and rotates around a vertical line passing through a base end thereof as a central axis. The arm 25 moves the nozzle 21 to the container 100 in a primary BF separation position of the immune enzyme reaction unit 10 and to the cleaning tank 24 at a nozzle cleaning position on a side of the first BF separation unit 11. In the primary BF separation position, the nozzle 21 discharges a cleaning solution into the container 100 into which the specimen and the magnetic reagent are injected and sucks the same therefrom to clean, thereby removing the unreacted substance which does not react with the magnetic reagent (BF cleaning).

When the container 100 is conveyed to the primary BF separation position, the first BF separation unit 11 performs the primary BF separation. By the primary BF separation and the BF cleaning, the reaction product obtained by binding the target antigen in the specimen and the magnetic reagent is magnetically collected in the container 100. When the primary BF separation ends, the arm 25 moves the nozzle 21 to the nozzle cleaning position where the cleaning tank 24 is located.

After the primary BF separation ends, when the labelling reagent is dispensed by the second reagent dispensing unit 9 into the container 100 in which the reaction product remains, the immune enzyme reaction unit 10 stirs a mixed solution of the magnetic reagent and the specimen by a stirring mechanism not illustrated and allows immune reaction of the reaction product and the labeling reagent for a certain period of time (secondary immune reaction). Next, the immune enzyme reaction unit 10 moves the container 100 to a second magnetism collecting mechanism not illustrated, and magnetically collects an immune complex obtained by binding the reaction product and the labelling reagent by magnetic force. Then, in this state, the interior of the container 100 is cleaned, and the unreacted substance which does not react with the labeling reagent is removed (secondary BF separation).

The second magnetism collecting mechanism including a magnet similar to the magnet 13 of the first magnetism collecting mechanism is fixed at a position corresponding to the second BF separation unit 12 arranged in the vicinity of the outer periphery of the immune enzyme reaction unit 10. In the example of Fig. 1, the magnet included in the second magnetism collecting mechanism is arranged below the nozzle 21 at a secondary BF separation position.

The second BF separation unit 12 has the configuration similar to that of the first BF separation unit 11 and is arranged at a predetermined distance in the circumferential direction from the first BF separation unit 11. The arm 25 freely moves up and down in the vertical direction and rotates around a vertical line passing through a base end thereof as a central axis. The arm 25 moves the nozzle 21 to the container 100 at the secondary BF separation position of the immune enzyme reaction unit 10 and the cleaning tank 24 at the nozzle cleaning position on a side of the second BF separation unit 12. In the secondary BF separation position, the nozzle 21 discharges the cleaning solution into the container 100 into which the labelling reagent is injected and sucks the same therefrom to clean, thereby removing a surplus unreacted substance which does not react with the labelling reagent (BF cleaning).

When the container 100 is conveyed to the secondary BF separation position, the second BF separation unit 12 performs the secondary BF separation. By the secondary BF separation and the BF cleaning, the immune complex obtained by binding the reaction product including the target antigen in the specimen and the magnetic reagent and the labeling reagent is magnetically collected in the container 100. When the secondary BF separation ends, the arm 25 moves the nozzle 21 to the nozzle cleaning position where the cleaning tank 24 is located.

A substrate solution dispensing unit 26 is further attached to the arm 25 of the second BF separation unit 12. The substrate solution dispensing unit 26 is arranged at a position farther from a rotation axis of the arm 25 than the nozzle 21. The substrate solution dispensing unit 26 is connected to the substrate solution cooler 14 which accommodates and cools a substrate solution via a tube not illustrated. The substrate solution dispensing unit 26 dispenses the substrate solution containing a chemiluminescent substrate which specifically reacts with the labeling reagent for the immune complex obtained by binding the magnetic reagent, the antigen, and the labeling reagent (enzyme antibody) into the container 100 after the secondary BF separation. Then, the container 100 into which the substrate solution is injected is conveyed to a predetermined position by rotation of the immune enzyme reaction unit 10. The container 100 conveyed to a predetermined position is transferred to the luminescence measurement unit 16 by the container transfer unit 15.

The luminescence measurement unit 16 is a photometry unit using a photomultiplier tube (PMT) 16a as a detector and performs photometry of a luminescence phenomenon of the immune complex and the chemiluminescent substrate by photo counting. That is, the luminescence amount is measured. A photometry signal corresponding to a light flux (luminescence amount) detected by the luminescence measurement unit 16 is digitized by an analog-digital converter not illustrated. The digitized photometry signal is input to the control device 40 via a serial interface not illustrated and the like, and analysis processing is performed.

### 2. Configuration of Container

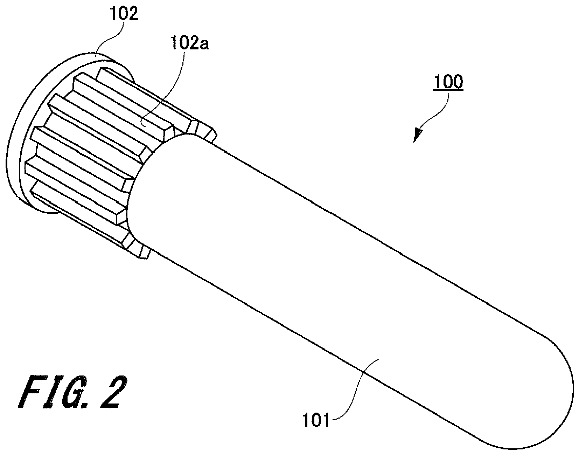

Next, a configuration of the container 100 is described with reference to Fig. 2.

Fig. 2 is a perspective view illustrating the container 100 used in the automatic analyzer 1.

As illustrated in Fig. 2, the container 100 is formed into a bottomed cylindrical shape and includes a body portion 101 and a neck portion 102. A material of the container 100 may include resin and glass. In addition, the container 100 is formed to be transparent or translucent.

One end in an axial direction of the body portion 101 forms a bottom of the container 100 and is formed into a substantially hemispherical shape. The neck portion 102 is provided on the other end in the axial direction of the body portion 101. An outer diameter of the neck portion 102 is larger than an outer diameter of the body portion 101. As a result, a step is formed between the neck portion 102 and the body portion 101. A groove 102a extending in the axial direction of the neck portion 102 is formed on an outer peripheral surface of the neck portion 102.

Meanwhile, the neck portion of the container is not limited to that having the groove as long as this has an outer diameter larger than the outer diameter of the body portion. The neck portion of the container may include, for example, that having a first outer diameter portion larger than the body portion in outer diameter and a second outer diameter portion larger the first outer diameter portion in outer diameter, and that having a part with an outer diameter larger than that of the body portion.

### 3. Configuration of Container Supply Unit

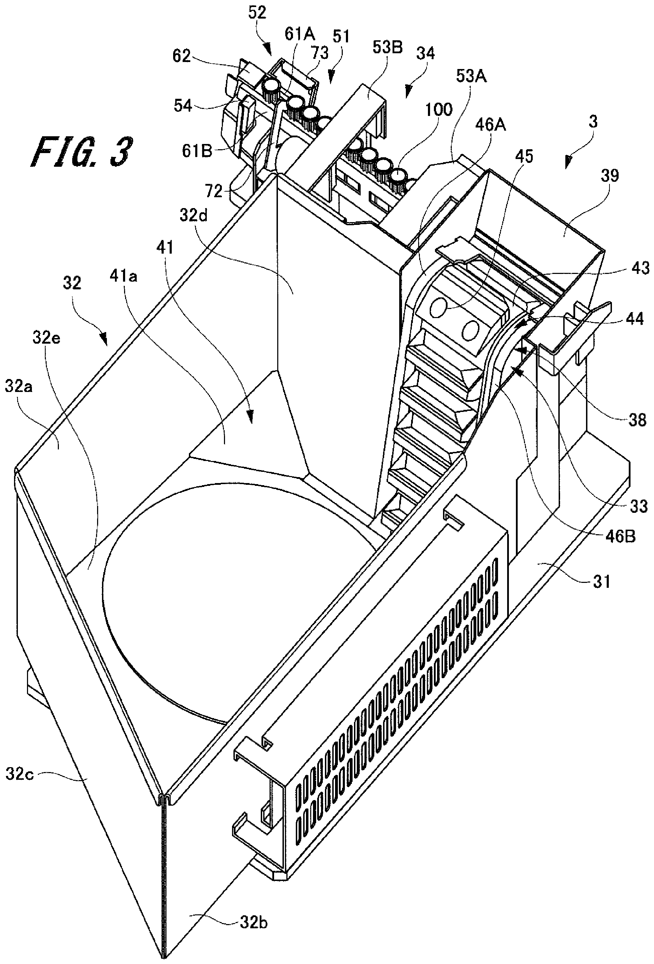

Next, a detailed configuration of the container supply unit 3 is described with reference to Figs. 3 to 11.

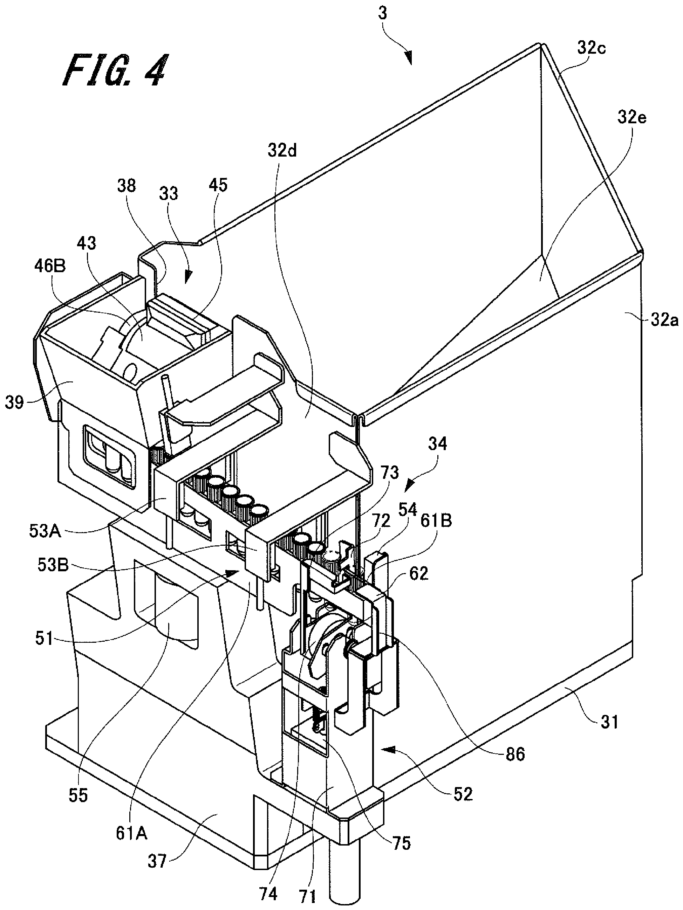

Figs. 3 and 4 are perspective views of the container supply unit 3.

As illustrated in Figs. 3 and 4, the container supply unit 3 is provided with a base portion 31, a container retaining unit 32, a container discharge unit 33, and a container alignment unit 34. The base portion 31 is formed into a rectangular plate shape having an appropriate thickness.

### [Container Retaining Unit]

The container retaining unit 32 is formed into a hollow box shape with an upper surface opened, and retains a plurality of containers 100 (refer to Fig. 2) therein. The container retaining unit 32 includes four side surface plates 32a, 32b, 32c, and 32d and a bottom surface plate 32e. The side surface plates 32a and 32b are opposed to each other, and the side surface plates 32c and 32d are opposed to each other.

A cutout 38 extending in a vertical direction is formed on the side surface plate 32d. In this cutout 38, the container discharge unit 33 is arranged. A cover member 39 covering the cutout 38 and the container discharge unit 33 is attached to the side surface plate 32d. Inside the cover member 39, one end of an alignment rail 51 to be described later of the container alignment unit 34 is arranged.

An inner surface of the bottom surface plate 32e is inclined so as to be lower from the side surface plate 32c toward the side surface plate 32d. As a result, a plurality of containers 100 retained in the container retaining unit 32 is guided by the bottom surface plate 32e to move toward the side surface plate 32d on which the container discharge unit 33 is arranged. A container guiding auxiliary member 41 is provided on the inner surface of the bottom surface plate 32e. The container guiding auxiliary member 41 is arranged at a corner of the bottom surface plate 32e where the side surface plate 32a connects to the side surface plate 32d.

The container guiding auxiliary member 41 includes a guide surface 41a. The guide surface 41a is inclined so as to be lower from the side surface plate 32d and the side surface plate 32a toward the bottom surface plate 32e. This guides the container 100 located at the corner of the bottom surface plate 32e to substantially the center of the container retaining unit 32.

The opening of the container retaining unit 32 is closed by a retaining unit lid (not illustrated) provided on the device exterior body 18 (refer to Fig. 1). When a plurality of containers 100 is put into the container retaining unit 32, the retaining unit lid is opened to expose the opening of the container retaining unit 32.

The container discharge unit 33 discharges a plurality of containers retained in the container retaining unit 32 out of the side surface plate 32d.

### [Container Discharge Unit]

Next, the container discharge unit 33 is described.

The container discharge unit 33 is provided with an annular belt 43, a belt supporting mechanism 44 which rotatably supports the annular belt 43, a belt rotating mechanism not illustrated which rotates the annular belt 43, and a mounting member 45 provided on the annular belt 43.

The annular belt 43 is formed into an endless shape and is stretched around a driving roller and a driven roller of the belt supporting mechanism 44. A material of the annular belt 43 may include a rubber material, synthetic resin, a metal wire and the like.

A plurality of mounting members 45 is provided on an outer peripheral surface of the annular belt 43. A plurality of mounting members 45 is arranged at a predetermined interval in a circumferential direction of the annular belt 43. The containers 100 retained in the container retaining unit 32 are mounted on the plurality of mounting members 45.

The belt supporting mechanism 44 includes the driving roller, the driven roller, and a pair of roller supporting plates 46A and 46B. The pair of roller supporting plates 46A and 46B is formed of a substantially rectangular plates extending in the vertical direction with one flat surfaces opposed to each other.

The driving roller is arranged between the pair of roller supporting plates 46A and 46B and is rotatably supported at lower portions of the pair of roller supporting plates 46A and 46B. The driven roller is arranged between the pair of roller supporting plates 46A and 46B and is rotatably supported at upper portions of the pair of roller supporting plates 46A and 46B. As a result, the annular belt 43 stretched around the driving roller and the driven roller is formed into an annular shape elongated in the vertical direction.

A motor forming the belt rotating mechanism not illustrated is connected to the driving roller. When the motor is driven, the driving roller rotates, and the annular belt 43 stretched around the driving roller rotates.

As a result, on the annular belt 43, a forward route through which the mounting member 45 moves upward and a backward route through which the mounting member 45 moves downward are formed. Meanwhile, the forward route of the annular belt 43 is arranged in the container retaining unit 32, and the backward route of the annular belt 43 is arranged outside the container retaining unit 32.

Also, the forward route of the annular belt 43 is switched to the backward route via a curved portion (hereinafter referred to as an "upper curved portion") which is the upper portion of the annular belt 43. Then, the backward route of the annular belt 43 is switched to the forward route via a curved portion (hereinafter referred to as a "lower curved portion") which is the lower portion of the annular belt 43. The lower curved portion of the annular belt 43 is arranged on a lower portion of the bottom surface plate 32e of the container retaining unit 32 together with the belt rotating mechanism.

Then, a plurality of mounting members 45 conveys the containers 100 mounted in the forward route, and discharges the containers 100 toward the cover member 39 in the upper curved portion where the forward route switches to the backward route.

### [Container Alignment Unit]

Next, the container alignment unit 34 is described with reference to Figs. 3 to 11.

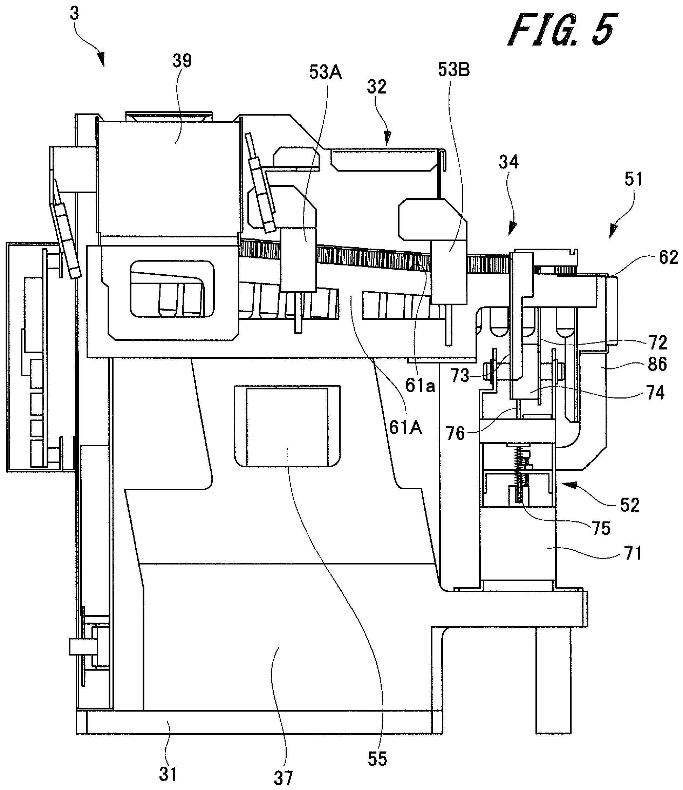

Fig. 5 is a side view of the container supply unit 3.

As illustrated in Figs. 3 to 5, the container alignment unit 34 is supported by a plurality of alignment unit supporting members 37 provided on the base portion 31 (refer to Fig. 4). The container alignment unit 34 aligns the containers 100 discharged from the container discharge unit 33. Then, the container alignment unit 34 conveys the aligned containers 100 to a transfer position where they are delivered to the container conveyance unit 5.

The container alignment unit 34 is provided with an alignment rail 51, a shutter mechanism 52, quantity monitoring sensors 53A and 53B, a container presence/absence sensor 54, and a vibration generator 55 which vibrates the alignment rail 51.

The alignment rail 51 is formed of two flat plates 61A and 61B opposed to each other. Each of the flat plates 61A and 61B is formed into a horizontally elongated substantially rectangular shape and arranged substantially in parallel with the side surface plate 32d. A distance between the opposing flat surfaces of the flat plates 61A and 61B is longer than the outer diameter of the body portion 101 of the container 100 and is shorter than the outer diameter of the neck portion 102. For example, the distance between the opposing flat surfaces of the flat plates 61A and 61B is set to be longer by approximately 0.1 to 0.5 mm than the outer diameter of the body portion 101.

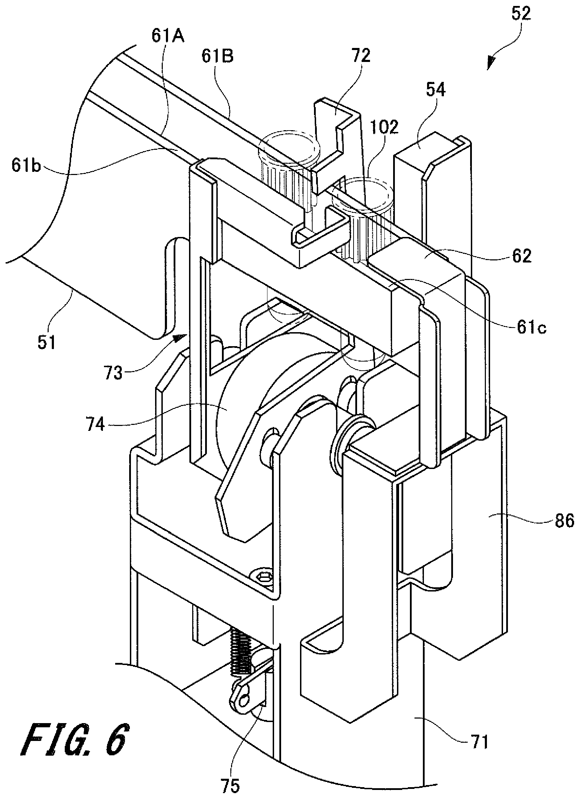

As illustrated in Fig. 6, one end in a longitudinal direction of the alignment rail 51, that is, an upstream side in a conveying direction penetrates the above-described cover member 39 to be arranged in the cover member 39. That is, the container 100 discharged from the container discharge unit 33 is delivered to the alignment rail 51 in the cover member 39. Meanwhile, a detailed configuration of the alignment rail 51 is to be described later.

As illustrated in Figs. 4 to 5, the vibration generator 55 is attached to the alignment rail 51 or the alignment unit supporting member 37 which supports the alignment rail 51. Examples of the vibration generator 55 may include an air vibrator, an electric vibrator, a highfrequency vibrator and the like, for example. As the alignment rail 51 vibrates by the vibration generator 55, the container 100 held by the alignment rail 51 gradually moves toward the other end of the alignment rail 51, that is, toward a downstream side in the conveying direction. The downstream side of the alignment rail 51 is set at the transfer position at which the container 100 is delivered to the container conveyance unit 5 described above.

Meanwhile, the vibration generator 55 applies asymmetric vibration to the alignment rail 51 in order to smoothly move the container 100 to the transfer position. For this reason, force directed to the other end of the alignment rail 51 always acts on the container 100 by the vibration applied to the alignment rail 51.

Fig. 6 is a perspective view illustrating the vicinity of the transfer position of the alignment rail 51.

As illustrated in Fig. 6, the shutter mechanism 52 is arranged so as to be closer to the cover member 39 than the transfer position of the alignment rail 51 on the downstream side in the conveying direction of the alignment rail 51, that is, in the vicinity of the transfer position. The shutter mechanism 52 temporarily blocks the movement of a plurality of containers 100 moving along the alignment rails 51 and delivers the containers 100 one by one to the transfer position of the alignment rail 51.

As illustrated in Figs. 5 and 6, the shutter mechanism 52 is provided with a supporting frame 71, a first shutter member 72, a second shutter member 73, a rotating shaft 74, a driving unit 75, and a link member 76.

The supporting frame 71 is supported by the alignment unit supporting member 37. The driving unit 75 is provided on the supporting frame 71. The rotating shaft 74 is rotatably supported by the supporting frame 71.

The first shutter member 72 and second shutter member 73 are attached to the rotating shaft 74. The first shutter member 72 is arranged downstream of the second shutter member 73 in the conveying direction of the alignment rail 51, that is, on the side of the transfer position. Each of the first shutter member 72 and the second shutter member 73 is formed of a plate body including a flat surface intersecting with the conveying direction of the alignment rail 51. Then, the first shutter member 72 and the second shutter member 73 block the movement of the container 100 along the alignment rail 51 for a predetermined period.

The first shutter member 72 and the second shutter member 73 are arranged so as to be displaced from each other in a rotational direction of the rotating shaft 74 and are arranged on both sides of the alignment rail 51 with the alignment rail 51 interposed therebetween. A first shutter piece 72a is arranged on a flat plate 61B side of the alignment rail 51. Also, a second shutter piece 73a is arranged on a flat plate 61A side of the alignment rail 51.

As a result, when the first shutter member 72 blocks the movement of the container 100 along the alignment rail 51, the second shutter member 73 does not block the movement of the container 100. Also, when the second shutter member 73 blocks the movement of the container 100 along the alignment rail 51, the first shutter member 72 does not block the movement of the container 100.

A distance between the first shutter member 72 and the second shutter member 73 is slightly longer than the outer diameter of the body portion 101 of the container 100. Therefore, when the movement of the container 100 is blocked by the first shutter member 72 and the second shutter member 73, a plurality of containers 100 held by the alignment rail 51 is cut out one by one to be arranged at the transfer position of the alignment rail 51.

A link member 76 is attached to a driving shaft of the driving unit 75. The link member 76 is connected to the first shutter member 72 and the second shutter member 73. The link member 76 transmits driving force of the driving unit 75 to the first shutter member 72 and the second shutter member 73.

Meanwhile, as a driving mechanism for rotating the first shutter member 72 and the second shutter member 73, for example, a belt mechanism using an annular belt and a pulley, or a gear mechanism using a stepping motor and a gear train may be used. Alternatively, various mechanisms such as a chain mechanism using a sprocket and a chain may be applied.

In addition, the shutter mechanism 52 is provided with a container presence/absence sensor 54. The container presence/absence sensor 54 is fixed to the supporting frame 71 via a bracket not illustrated. The container presence/absence sensor 54 is opposed to the container 100 arranged at the transfer position of the alignment rail 51. The container presence/absence sensor 54 is, for example, a photosensor, and detects whether the container 100 is present at an opposed position (transfer position).

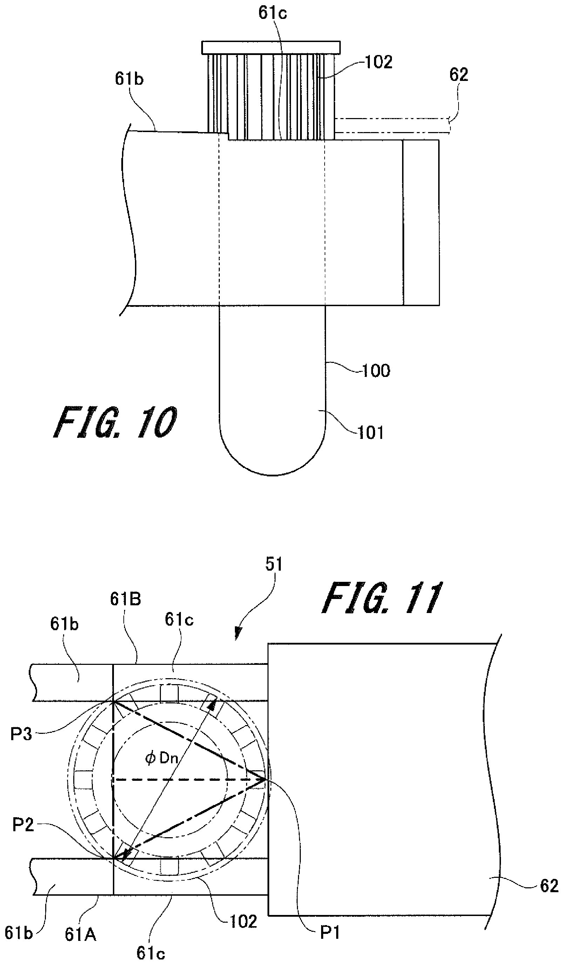

Furthermore, the shutter mechanism 52 is provided with a stopper member 62. The stopper member 62 is fixed to the supporting frame 71 via a fixing bracket 86. The stopper member 62 is arranged above a stepped surface portion 61c of the alignment rail 51 to be described later in a vertical direction and is opposed to the stepped surface portion 61c with a gap above the same in the vertical direction. Then, the stopper member 62 abuts the neck portion 102 of the container 100 arranged at a movement position of the alignment rail 51 (refer to Fig. 10) .

The quantity monitoring sensors 53A and 53B are arranged between the cover member 39 and the shutter mechanism 52. The quantity monitoring sensors 53A and 53B are, for example, photosensors, and detect whether the container 100 is present at an opposing position.

When both the quantity monitoring sensors 53A and 53B detect that the container 100 is present at the opposing position, it may be determined that there is the predetermined number or more of (five, in this embodiment) containers 100 before passing through the shutter mechanism 52. As a result, information that at least the predetermined number or more of containers 100 are continuously supplied to a post-process may be transmitted to a control unit which controls the post-process.

Also, when at least one of the quantity monitoring sensors 53A, and 53B detects that there is no container 100 at the opposing position, it is possible to determine that the number of containers 100 before passing through the shutter mechanism 52 is smaller than the predetermined number. As a result, information that at least the predetermined number or more of containers 100 are not continuously supplied to the post-process may be transmitted to the control unit which controls the post-process.

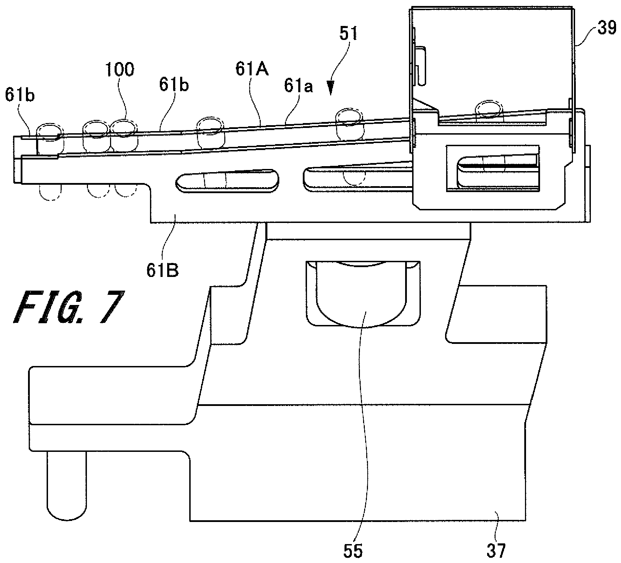

Next, a detailed configuration of the alignment rail 51 is described with reference to Figs. 7 to 11.

Figs. 7 to 9 are views illustrating the alignment rail 51. Figs. 10 and 11 are illustrative views illustrating a conveyance position of the alignment rails 51.

As illustrated in Figs. 6 to 8, at upper ends in the vertical direction of the flat plates 61A and 61B, a first inclined surface portion 61a illustrating an example of a conveying speed ensuring area, a second inclined surface portion 61b illustrating an example of an orientation stabilizing area, and the stepped surface portion 61c illustrating an example of a flat portion are formed.

The first inclined surface portion 61a is provided on one side in a longitudinal direction of the flat plates 61A and 61B, that is, on the upstream side in the conveying direction. On the downstream side in the conveying direction of the first inclined surface portion 61a, the second inclined surface portion 61b is continuously provided. On the downstream side in the conveying direction of the second inclined surface portion 61b, the stepped surface portion 61c is provided. That is, the second inclined surface portion 61b is formed between the first inclined surface portion 61a and the stepped surface portion 61c.

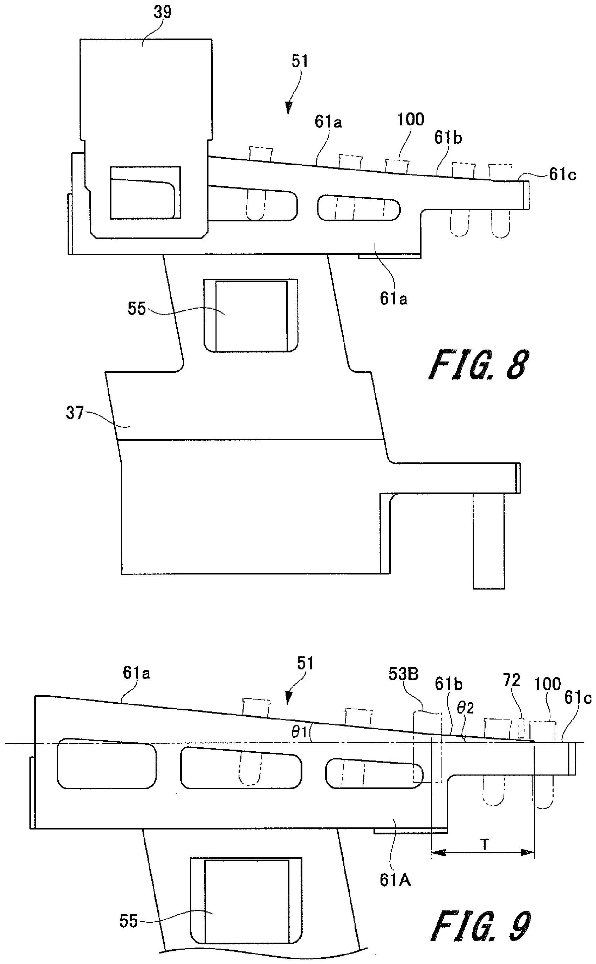

As illustrated in Fig. 8, the first inclined surface portion 61a is inclined such that a height in the vertical direction continuously decreases from the upstream side in the conveying direction, that is, a receiving position where the container 100 is received from the cover member 39 toward the downstream side. The first inclined surface portion 61a is inclined at a first inclination angle of θ1 with respect to a horizontal direction. The first inclination angle θ1 is set based on the conveying speed of the container 100 and a timing of delivering the container 100 at the transfer position. The first inclination angle θ1 is set to twice the angle for obtaining minimum conveying force for conveying the container 100. The first inclination angle θ1 is set to, for example, 4.5°.

As is the case with the first inclined surface portion 61a, the second inclined surface portion 61b is inclined so that the height in the vertical direction continuously decreases from the upstream side to the downstream side in the conveying direction. The second inclined surface portion 61b is inclined at a second inclination angle θ2 with respect to the horizontal direction. The second inclination angle θ2 is set to be smaller than the first inclination angle θ1 (θ1>θ2). That is, the second inclined surface portion 62b is formed more gently than the first inclined surface portion 61a.

In the second inclined surface portion 61b, the orientation of the container 100 which passes through the first inclined surface portion 61a is stabilized. That is, when the container 100 passes through the second inclined surface portion 61b, an axial direction of the container 100 is substantially parallel to the vertical direction, and the orientation thereof is stabilized. The second inclination angle θ2 is set to an angle for obtaining minimum conveying force for conveying the container 100. The second inclination angle θ2 is set to 2°, for example.

An interval T in the conveying direction on the second inclined surface portion 61b is set to a length required for stabilizing the orientation of the container 100 which passes through the first inclined surface portion 61a. For example, the interval T is set corresponding to an interval between the quantity monitoring sensor 53B arranged on the downstream side of the two quantity monitoring sensors 53A and 53B and the first shutter member 72 of the shutter mechanism 52.

As illustrated in Fig. 10, the stepped surface portion 61c is recessed downward by one step in the vertical direction from the second inclined surface portion 61b. The stepped surface portion 61c is a flat portion formed so as to be substantially parallel to the horizontal direction. The stepped surface portion 61c serves as the transfer position on the alignment rail 51.

Also, a height of the step in the vertical direction between the end on the downstream side in the conveying direction of the second inclined surface portion 61b and the stepped surface portion 61c is set such that the container 100 conveyed to the stepped surface portion 61c cannot return again to the second inclined surface portion 61b by vibration or weight. The height of the step in the vertical direction between the end on the downstream side in the conveying direction of the second inclined surface portion 61b and the stepped surface portion 61c is set to 0.5 mm, for example.

Herein, as described above, in the container alignment unit 34 of this example, by vibrating the alignment rail 51 by the vibration generator 55, force to move the container 100 on the downstream side in the conveying direction of the alignment rail 51, that is, toward the stopper member 62 acts thereon. Then, due to reaction when the container 100 is brought into contact with the stopper member 62, the container 100 is repeatedly pushed back in the direction opposite to an advancing direction and brought into contact with the stopper member 62 again. Therefore, there is a risk that the container 100 violently vibrates at the transfer position of the alignment rail 51. As a result, there is a risk that the container 100 cannot stop at the transfer position, the orientation thereof cannot be determined, and the container presence/absence sensor 54 erroneously detects the same or the container conveyance unit 5 cannot grasp the container 100.

On the other hand, as illustrated in Fig. 10, a site where the stopper member 62 is brought into contact with the container 100 is defined as the neck portion 102. This makes it possible to make a contact area of the stopper member 62 and the container 100 smaller than that at the time of contact with the body portion 101 of the container 100. As a result, it is possible to inhibit the container 100 from being pushed back from the transfer position by reaction caused by contact with the stopper member 62.

Also, the alignment rail 51 is formed while making the transfer position the stepped surface portion 61c. Therefore, the neck portion 102 of the container 100 conveyed to the transfer position on the alignment rail 51 is held by a step portion on the second inclined surface portion 61b side of the stepped surface portion 61c and the stopper member 62. This makes it possible to reduce an amount pushed back by the reaction caused by the contact of the neck portion 102 of the container 100 with the stopper member 62 and to keep the container 100 substantially stationary at the transfer position.

Herein, it is preferable that the position where the stopper member 62 is provided and the position where the stepped surface portion 61c is formed on the flat plates 61A and 61B satisfy the following requirements. As illustrated in Fig. 11, a triangle formed by a point P1 contacting the neck portion 102 of the stopper member 62, and points P2 and P3 at which the step portions of the flat plates 61A and 61B are brought into contact with the neck portion 102 is inscribed inside the neck portion 102 having an outer diameter of Dn. Herein, actually, the interval between the flat plates 61A and 61b of the alignment rail 51 and the outer diameter Dn of the neck portion 102 are fixed values. Therefore, it is preferable to adjust the position at which the stopper member 62 is provided by moving the same in the moving direction of the container 100.

Also, the stopper member 62 of this embodiment is provided on the shutter mechanism 52 which does not vibrate, and is arranged with an interval from the stepped surface portion 61c. As a result, since the stopper member 62 does not vibrate, it is possible to hold the container 100 conveyed to the transfer position of the alignment rail 51 in a substantially stationary state.

### 4. Operation of Container Alignment Unit

Next, operation of the container alignment unit 34 having the above-described configuration is described with reference to Figs. 4 to 11.

First, as illustrated in Figs. 4, 5, and 7, when the container 100 is discharged from the container discharge unit 33 to a space between the two flat plates 61A and 61B of the alignment rail 51, the body portion 101 penetrates through a space between the flat plates 61A and 61B, and the neck portion 102 is engaged with upper ends of the flat plates 61A and 61B. As a result, the container 100 discharged to the container alignment unit 34 is held by the alignment rail 51 in the orientation in which the axial direction thereof is parallel to the vertical direction and the bottom thereof is located on a lower side.

The container 100 held by the alignment rail 51 in the orientation in which the neck portion 102 is located on the lower side is brought into contact with a side plate portion through which the alignment rail 51 penetrates of the cover member 39 while moving along the alignment rail 51. As a result, the container 100 rotates around an imaginary line extending in a direction orthogonal to the two flat plates 61A and 61B of the alignment rail 51 to be held on the alignment rail 51 in the orientation in which the bottom is located on the lower side.

Meanwhile, in this embodiment, it is configured such that the container 100 held by the alignment rail 51 in the orientation in which the neck portion 102 is located on the lower side is brought into contact with the cover member 39. However, as the container supply unit and the automatic analyzer of the present invention, an orientation correction piece with which the container 100 in the orientation in which the neck portion 102 is located on the lower side is brought into contact may be provided separately from the cover member 39.

Also, the cover member 39 guides the container 100 discharged from the container discharge unit 33 and disengages from the container alignment unit 34 without penetrating through the space between the two flat plates 61A and 61B of the alignment rail 51 to direct to the alignment rail 51 again.

Next, as illustrated in Figs. 7 to 8, due to the vibration of the vibration generator 55, the container 100 discharged to the alignment rail 51 passes through the first inclined surface portion 61a which is the conveying speed ensuring area. As described above, the first inclination angle θ1 of the first inclined surface portion 61a is set to twice the angle for obtaining the minimum conveying force for conveying the container 100. Therefore, it is possible to improve the conveying speed of the container 100 passing through the first inclined surface portion 61a.

The container 100 which passes through the first inclined surface portion 61a is conveyed to the second inclined surface portion 61b which is the orientation stabilizing area. Also, as described above, the second inclination angle θ2 of the second inclined surface portion 61b is set to be gentler than the first inclination angle θ1. Therefore, when passing through the second inclined surface portion 61b, the axial direction of the container 100 is substantially parallel to the vertical direction, and the orientation thereof is stabilized. Also, the second inclination angle θ2 is set to the angle for obtaining the minimum conveying force for conveying the container 100. Therefore, when the container 100 passes through the second inclined surface portion 61b, it is possible to prevent the container 100 from being clogged on the second inclined surface portion 61b.

As illustrated in Figs. 6, 10, and 11, the container 100 passing through the second inclined surface portion 61b is cut one by one by the shutter mechanism 52 and conveyed to the stepped surface portion 61c which is the transfer position of the alignment rail 51. The container 100 conveyed to the stepped surface portion 61c abuts the stopper member 62 and is held by the step portion of the alignment rail 51 and the stopper member 62. Then, the container 100 is gripped by the container conveyance unit 5 (refer to Fig. 1) and transferred to another unit. Then, the operation of the container alignment unit 34 is completed.

As described above, according to the container supply unit 3 of this embodiment, the conveying speed of the container 100 may be improved in the first inclined surface portion 61a which is the conveying speed ensuring area on the alignment rail 51. Furthermore, the orientation of the container may be stabilized by the second inclined surface portion 61b which is the orientation stabilizing area. As a result, the conveying speed of the container 100 may be ensured without increasing vibration force generated by the vibration generator 55, and the orientation of the container 100 at the conveying position may be stabilized.

The present invention is not limited to the embodiment described above and illustrated in the drawings, and various modifications may be made without departing from the gist of the invention recited in claims. For example, in the above-described embodiment, an example in which the present invention is applied to the immune analyzer used for analyzing a biological specimen such as blood or urine as the automatic analyzer is described. However, the automatic analyzer of the present invention is not limited to the above-described embodiment, but this is applicable to a device for conducting various other analyses of water quality, food and the like.

Also, in the above-described embodiment, the example in which the inclination angle of the alignment rail 51 is changed in two steps by providing the first inclined surface portion 61a and the second inclined surface portion 61b is described; however, the present invention is not limited thereto. For example, the inclination angle of the alignment rail may be changed in three or more steps, and the inclination angle of the alignment rail in the conveying speed ensuring area or the orientation stabilizing area may be changed in two or more steps.

Alternatively, an upper end of the alignment rail may be formed into a downward circular arc shape, and the inclination angle of the alignment rail may be changed to be continuously smaller in a stepless manner from the conveying speed ensuring area to the orientation stabilizing area. Furthermore, it is also possible to form the conveying speed ensuring area on the alignment rail into a first circular arc shape having a first curvature radius and to form the orientation securing area into a second circular arc shape having a second curvature radius larger than the first curvature radius.

Furthermore, although an example in which the shutter mechanism 52 is provided as a mechanism for cutting the container 100 one by one and the alignment rail 51 and the transfer position which is the flat portion are formed integrally with each other is described in the above-described embodiment, the present invention is limited to this. For example, as a mechanism for taking out the leading container on the downstream side in the conveying direction of the alignment rail one by one, it is possible that a rotary table having a U-shaped cutout is provided, a container is fitted in the cutout, and further the rotary table is rotated to transfer to another unit. In this case, the transfer position which is the flat portion serves as the cutout of the rotary table and is formed as a separate member from the alignment rail.

Although the example in which the vibration generator 55 which conveys the container 100 by vibrating the alignment rail 51 is provided is described in the above-described embodiment, the present invention is not limited to this. For example, it is possible to convey the container 100 by sliding the same on the alignment rail 51 by its own weight without providing the vibration generator 55.

### Reference Signs List

1 Automatic analyzer
2 Measurement device
3 Container supply unit
4 Specimen installation unit
5 Container conveyance unit
6 Specimen dispensing unit
7 Reagent cooling unit
18 Device exterior body
31 Base portion
32 Container retaining unit
33 Container discharge unit
34 Container alignment unit
39 Cover member
51 Alignment rail
52 Shutter mechanism
54 Container presence/absence sensor
55 Vibration generator
61a First inclined surface portion (conveying speed ensuring area)
61b Second inclined surface portion (orientation stabilizing area)
61c Stepped surface portion (flat portion, transfer position)
61A, 61B Flat plate
62 Stopper member
100 Container
101 Body portion
102 Neck portion

## Claims

1. A container supply unit comprising:
a container retaining unit which retains a plurality of containers;
a container discharge unit which discharges a plurality of containers retained in the container retaining unit; and
a container alignment unit which aligns containers discharged from the container discharge unit,
the container alignment unit provided with
an alignment rail which movably supports a container discharged from the container discharge unit to a transfer position where the container is delivered to another device,
the alignment rail including
a conveying speed ensuring area inclined with respect to a horizontal direction which conveys the container arranged from the container discharge unit, and
an orientation stabilizing area provided continuously on a downstream side in a conveying direction of the conveying speed ensuring area which conveys the container in which an inclination angle with respect to the horizontal direction is set to be smaller than the angle in the conveying speed ensuring area, and
the transfer position provided on a downstream side in the conveying direction of the orientation stabilizing area to be arranged parallel to the horizontal direction.

2. The container supply unit according to claim 1,
wherein the conveying speed ensuring area is a first inclined surface portion formed on an upstream side in the conveying direction of the alignment rail and inclined at a first inclination angle with respect to the horizontal direction, and
the orientation stabilizing area is a second inclined surface portion continuously formed on a downstream side in the conveying direction of the first inclined surface portion inclined at a second inclination angle with respect to the horizontal direction,
the second inclination angle being set to be smaller than the first inclination angle.

3. The container supply unit according to claim 1,
wherein the transfer position is a flat portion provided continuously on the downstream side in the conveying direction of the orientation stabilizing area on the alignment rail.

4. The container supply unit according to claim 3,
wherein the flat portion is a stepped surface portion formed so as to be recessed by one step in a vertical direction from the orientation stabilizing area.

5. The container supply unit according to claim 3,
wherein the container alignment unit includes
a stopper member opposed to the flat portion with a space above the flat portion in the vertical direction and abuts the container conveyed to the transfer position.

6. An automatic analyzer comprising:
a reaction unit which holds a container in which a specimen and a reagent are dispensed into the held container; and a container supply unit which supplies the container to the reaction unit,
wherein the container supply unit is provided with:
a container retaining unit which retains a plurality of containers;
a container discharge unit which discharges a plurality of containers retained in the container retaining unit; and
a container alignment unit which aligns containers discharged from the container discharge unit,
the container alignment unit provided with
an alignment rail which movably supports a container discharged from the container discharge unit to a transfer position where the container is delivered to the reaction device,
the alignment rail including
a conveying speed ensuring area inclined with respect to a horizontal direction which conveys the container arranged from the container discharge unit, and
an orientation stabilizing area provided continuously on a downstream side in a conveying direction of the conveying speed ensuring area which conveys the container in which an inclination angle with respect to the horizontal direction is set to be smaller than the angle in the conveying speed ensuring area, and
the transfer position provided on a downstream side in the conveying direction of the orientation stabilizing area to be arranged parallel to the horizontal direction.
